# EUROPEAN PATENT SPECIFICATION

(11) **EP 4 471 305 B1**
(45) Date of publication and mention of the grant of the patent: **07.10.2026**
(21) Application number: 24178164.0
(22) Date of filing: 27.05.2024
(51) Int. Cl.: F16K 3/34, F16K 31/00, E03B 7/12

(54) **ANTIFREEZE VALVE**
ANTIFROSTSCHUTZVENTIL
SOUPAPE ANTIGEL

(30) Priority: 29.05.2023 IT 202300010803
(43) Date of publication of application: 04.12.2024
(60) Divisional application: 25178875.8 / 4 613 943
(73) Proprietor: Böme S.r.l., 29010 Cavallirio (NO) (IT)
(72) Inventor: MEDINA, Carlo, 29010 Cavallirio (NO) (IT)
(74) Representative: Brunacci, Marco

(56) References cited:
- US-A1- 2017 167 625
- US-B1- 6 374 849

## Description

### Background of the invention

The invention relates to an antifreeze valve for a hydraulic system.

Specifically but not exclusively, the antifreeze valve according to this invention can be fitted to a heat pump hydraulic system, in particular to delivery conduits and return conduits connected to the aforesaid system.

### Prior art

Antifreeze valves are known for hydraulic systems, these antifreeze valves are fitted with a heat-sensitive actuator that, when a set minimum temperature value is reached, opens a water evacuation shutter (the water being near freezing point) to evacuate water from the hydraulic system. In this manner, the increase in the volume of water caused by the freezing of the latter damages the pipes in which the water flows.

US patent US 6 374 849 B1 describes an apparatus having a temperature-sensitive protection element.

One drawback of prior-art valves is the poor precision with which such antifreeze valves evacuate the water. In other words, prior-art antifreeze valves do not ensure repeatability of the dispensing at the same drainage flow rate.

In hydraulic systems, as in the aforesaid heat pump systems, the value that defines the water flow rate drained by the antifreeze valve is designed to be the minimum amount to be evacuated so that the water remaining in the conduits of the system does not damage the conduits. The drained water then has to be replenished for normal operation of the system. As the prior-art antifreeze valve, at each cycle of reaching the minimum drainage temperature, does not dispense the same flow rate of water, in order to have a sufficiently appropriate margin of safety, the antifreeze valve will have to be designed to evacuate more water than the minimum quantity required by the system, this entailing a clear waste of water.

This disadvantage is even more evident the greater the volume of water circulating in the system (or equivalently the longer and/or wider the conduits in the hydraulic system), to which a high amount of water to be drained and thus wasted corresponds.

In the light of what has been set out above, it is clear that there is ample room for improvement of current antifreeze valves. In particular, it would be desirable to dispose of an antifreeze valve for a hydraulic system that permits precise drainage (in a repetitive manner) of a desired amount of water.

### Objects of the invention

One object of the invention is to improve current antifreeze valves for hydraulic systems.

Another object is to provide a solution that is able to assure precise drainage of a desired quantity of water, so as to optimize (reduce) water wastage.

A still further object is to provide a versatile solution that is such as to make designing a hydraulic system easier and simpler.

Yet another object is to provide an antifreeze valve that is cheap, having a relatively low number of components and being constructionally simple.

### Summary of the invention

These objects and still others are achieved by an antifreeze valve as defined in the appended claims.

The antifreeze valve that is thus configured, particularly owing to the specific configuration and conformation of a first movable operating portion and of a second stationary operating portion of the shutter unit, permits the passage of fluid from a closure position, through a fluid- passage gap to be enabled, on the movement of the first operating portion along a stroke so as to ensure the passage of fluid at a constant flow rate independently of the position of the first operating portion along the aforesaid stroke.

### Short description of the drawings

The invention can be better understood and implemented with reference to the attached drawings that illustrate embodiments thereof by way of non-limiting example, in which:
Figure 1 is an elevated side view of an antifreeze valve according to a first embodiment;
Figure 2 is an elevated section of the antifreeze valve of Figure 1 taken through a median plane passing through a longitudinal axis of the valve;
Figure 3 is a top view of the antifreeze valve of Figure 1;
Figure 4 is an exploded view taken along the longitudinal axis of the antifreeze valve of Figure 1;
Figure 5 is a part of a shutter unit of the antifreeze valve of Figure 1;
Figure 6 is a side view of an evacuation port of the antifreeze valve, a curved profile is shown with a continuous line according to a first embodiment of the evacuation port, the linear profile of a second embodiment of the evacuation port is shown with a dashed line;
Figure 7 is a perspective bottom view of an evacuation port of the antifreeze valve according to a third embodiment;
Figure 7A is a perspective view of the antifreeze valve and of the evacuation port of Figure 7 in which the evacuation port is in a dismantled configuration.
Figure 7B is an elevated side view of the antifreeze valve and of the evacuation port of Figure 7 in which the evacuation port is in a fitted configuration.
Figure 7C is an elevated section taken through the median plane of the antifreeze valve and of the evacuation port of Figure 7 in which the evacuation port is in a fitted configuration;
Figure 8 is an elevated section of the antifreeze valve taken through the median plane of Figure 1 in which the shutter unit is in a complete closure position;
Figure 9 is an enlarged detail of Figure 8;
Figure 10 is an elevated section of the antifreeze valve taken through the median plane in which the shutter unit is in an intermediate closure position;
Figure 11 is an enlarged detail of Figure 10;
Figure 12 is an elevated section of the antifreeze valve taken through the median plane in which the shutter unit is in an open position;
Figure 13 is an enlarged detail of Figure 12;
Figure 14 is an elevated section of the antifreeze valve taken through the median plane in which an anti-detritus depositing groove is shown;
Figure 15 is an enlarged detail of Figure 14;
Figure 16 is an elevated section of the antifreeze valve taken through the median plane of Figure 1 in a first open position;
Figure 17 is an enlarged detail of Figure 16;
Figure 18 is an elevated section of the antifreeze valve taken through the median plane of Figure 1 in a second open position;
Figure 19 is an enlarged detail of Figure 18;
Figure 20 is an elevated side view of the part of the shutter unit of Figure 5;
Figure 21 is an elevated section passing through the median plane of the antifreeze valve of the part of the shutter unit of Figure 20;
Figure 22 is another elevated side view of the part of the shutter unit rotated by a right angle (90°) around the longitudinal axis with respect to the view of Figure 20;
Figure 23 is a further elevated side view of the part of the shutter unit taken from the side opposite the view of Figure 22;
Figure 24 is a top view of the shutter side;
Figure 25 is an enlarged detail of Figure 22;
Figure 26 is an enlarged detail of Figure 23;
Figure 27 is a side view of the shutter unit and of seal elements in the first open position;
Figure 28 is a side view of the shutter unit and of seal elements in the second open position;
Figure 29 is a side view of the shutter unit and of seal elements in which a cross section plane is shown;
Figure 30 is a top view partial section of the shutter unit in an open position.

### Detailed description

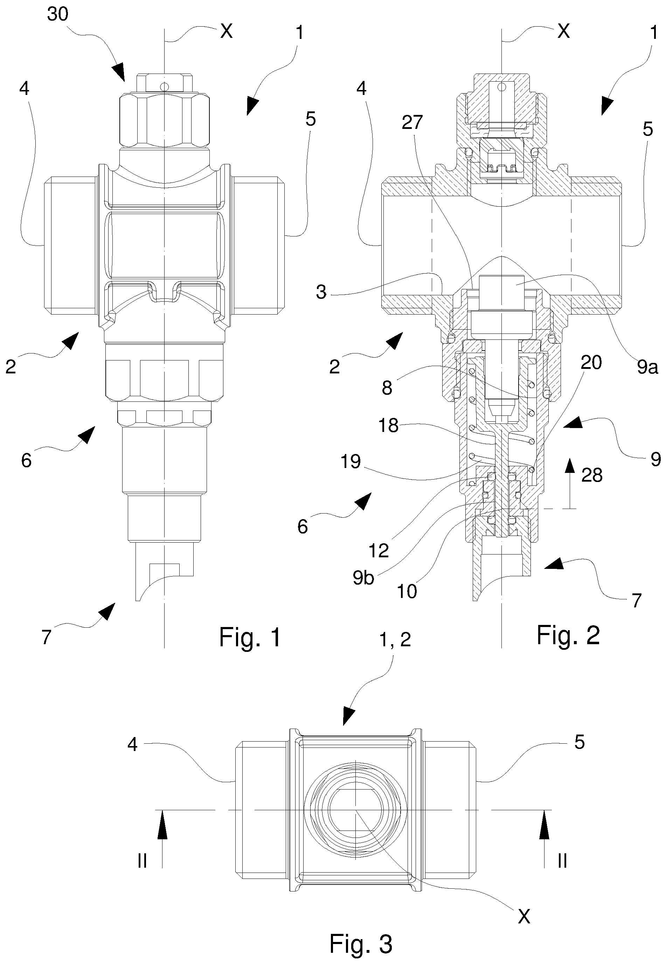

With reference to the aforesaid Figures, an antifreeze valve for a hydraulic system (Figure 1) is indicated by reference number 1.

The antifreeze valve 1 can be used in a heat pump hydraulic system (not shown), in particular in delivery conduits and return conduits provided in the aforesaid hydraulic system.

In this description, the fluid referred to is water. Nevertheless, the antifreeze valve can operate with any fluid, in particular with any liquid, that is subject to an increase in volume near the freezing temperature thereof.

The antifreeze valve 1 comprises a casing body 2 that defines a first cavity 3 (Figures 1, 2 and 3). The casing body 2 is provided with a first fitting 4 for the entry of a fluid, such as water, from a first hydraulic system branch, with a second fitting 5 for the exit of fluid from the first cavity 3 to a second branch of the hydraulic system.

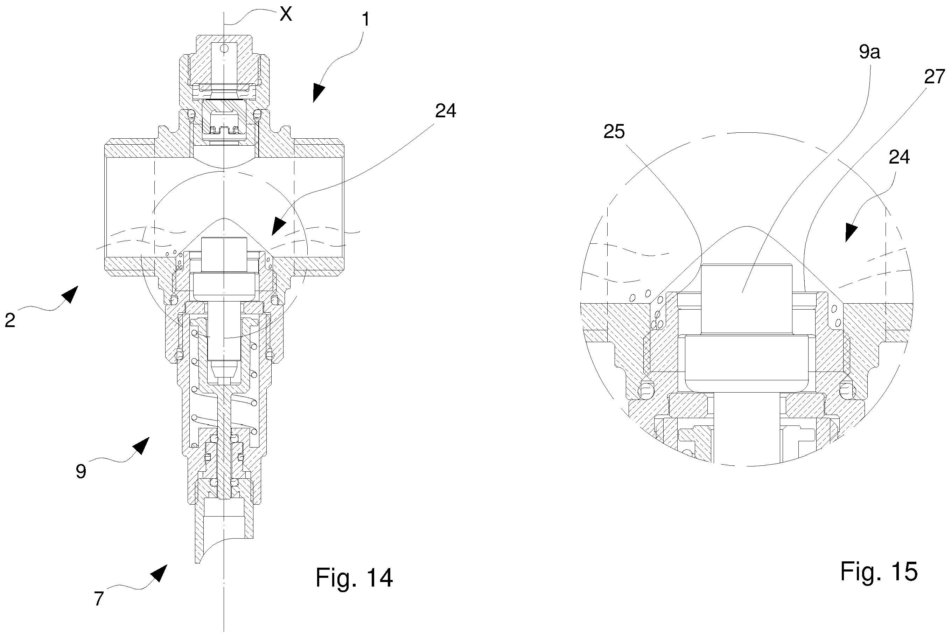

The antifreeze valve 1 further comprises a fluid-evacuation portion 6 that extends from the casing body 2 along a longitudinal axis X and defines internally a second cavity 8 in fluid communication with the first cavity 3. A passage opening 27 (Figures 2 and 15) can be defined between the first cavity 3 and the second cavity 8.

The fluid-evacuation portion 6 is provided with an evacuation port 7, 7', 7" to evacuate the fluid to the external axis of the antifreeze valve 1. As will be seen below in this description, the fluid-evacuation port 7, 7', 7" can adopt different configurations and/or conformations.

In the illustrated embodiment, the fluid-evacuation portion 6 is obtained in a hollow body distinct from the casing body 2 and connected to the latter by a hydraulic connection (of known type).

In a further embodiment that is not illustrated, the fluid-evacuation portion 6 and the casing body 2 are obtained as a single piece.

The antifreeze valve 1 comprises a heat-sensitive shutter unit 9 housed (at least partially) in the second cavity 8 and configured to enable a fluid flowrate to be evacuated through the evacuation port 7, 7', 7" when a minimum temperature is reached that prevents the fluid from freezing and damaging the hydraulic system (and the antifreeze valve too). Also the shutter unit 9, like the fluid-evacuation portion 6, extends along the longitudinal axis X (Figures 1, 2 and 3).

The shutter unit 9 comprises a first operating portion 10 that is movable along the longitudinal axis X and a second operating portion 12 that is stationary. The first operating portion 10 and the second operating portion 12 face one another to define a fluid-passage gap 9b that extends parallel to the longitudinal axis X (Figures 1, 9, 11, 13, 17 and 19).

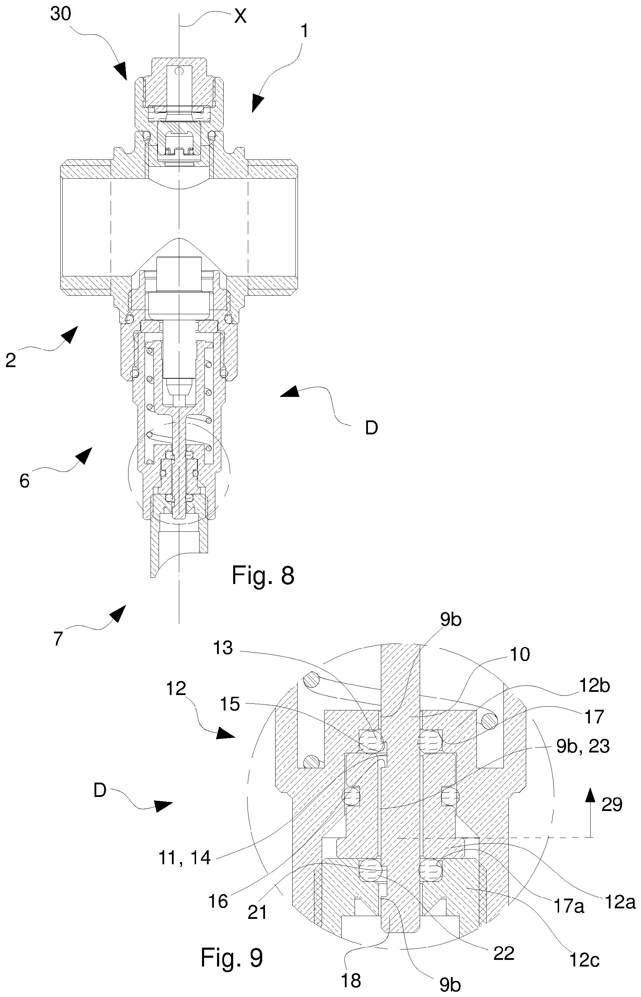

The first operating portion 10 and the second operating portion 12 are configured, in particular, to block the transit of fluid along the fluid-passage gap 9b in at least one closure position C, D (Figures 8, 9, 10 and 11). A condition of the antifreeze valve in normal operation can correspond to the at least one closure position C, D of the shutter unit 9, i.e. a condition in which the temperature of the fluid is relatively far from the freezing temperature.

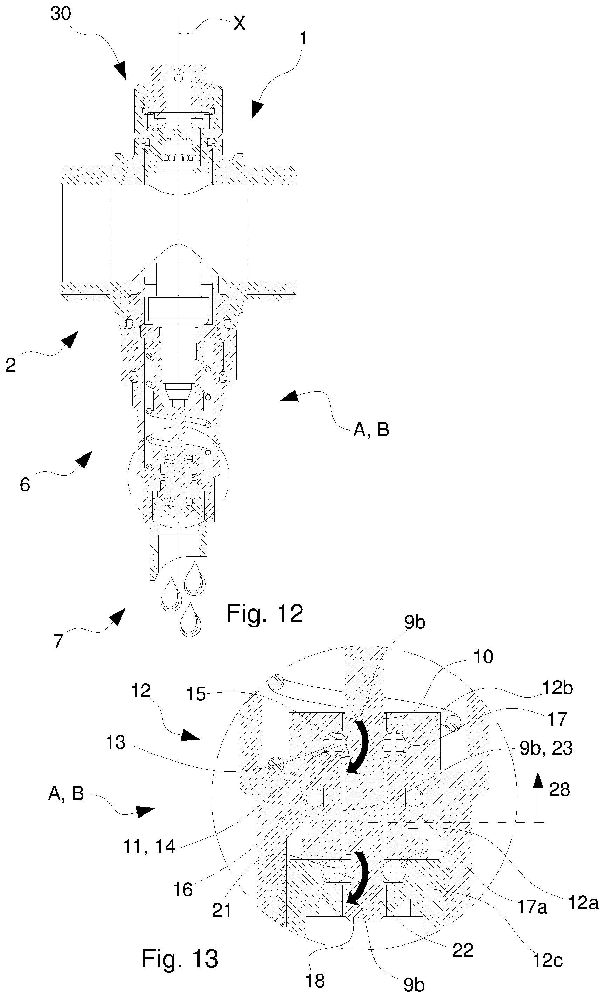

The first operating portion 10 and the second operating portion 12 are configured, in particular, to enable the fluid to transit along the fluid-passage gap 9b on the movement of the first operating portion 10 relatively to the second operating portion 12 along a stroke 28 (Figures 2 and 13).

The fluid- passage gap 9b is conformed to ensure a passage of fluid at a constant flow rate independently of the position of the first operating portion 10 along the stroke 28. The stroke 28 is defined along the longitudinal axis X. The value of the constant flow rate can be selected during the step of designing the antifreeze valve 1 according to the needs to drain/evacuate fluid from the specific hydraulic system. In other words, in the stroke portion 28 the evacuation is enabled of a fluid flow rate that is so designed as to prevent damage to the hydraulic system.

The fluid-passage gap 9b comprises a cross section (with respect to the longitudinal axis X) that is tubular, in particular has a cylindrical symmetry. This section can comprise a fluid-passage gap that - for most of the extent thereof - is substantially constant along the longitudinal axis X; the cross section can widen (or narrow) at the first operating portion 10 (or at the second operating portion 12).

In other words, the fluid-passage gap 9b is conformed with a transverse gap that is such as to ensure a transit of fluid at a constant flow rate independently of the position of the first operating portion 10 along the stroke 28 when the first operating portion 10 is not in a closure position C, D.

The fluid-passage gap 9b is configured, in particular, to place the second cavity 8 in communication with the exterior of the antifreeze valve 1 at the evacuation port 7.

The first operating portion 10 can be provided with a recess 11, the second operating portion 12 can be provided with a protuberance 13 (Figures 9, 11 and 13). The first and the second operating portions 10, 12 face one another in such a manner that this protuberance 13 is at least partially received in the recess 11. The protuberance 13 can protrude transversely to the longitudinal axis X to a bottom surface 14 of the recess 11.

The bottom surface 14 of the recess 11 can extend substantially parallel to the longitudinal axis X. At the upper and lower sides of the bottom surface 14 two side walls 15, 16 can be provided that are transverse to the longitudinal axis X. In particular, a first (upper) side wall 15 and a second (lower) side wall 16 can be provided that are both contiguous on the bottom surface 14 and define the sides of the recess 11.

In the illustrated embodiments, the protuberance 13 is obtained on an annular seal element, such as for example in an O-ring, housed in a respective housing seat 17 (which is also stationary with respect to the first operating portion 10).

In the illustrated embodiment, the second operating portion 12 is defined by a plurality of parts 12a, 12b, 12c assembled together. In this illustrated embodiment, the plurality of parts 12a, 12b, 12c comprises a tubular element 12a placed (stacked along the longitudinal axis X) between a bottom portion 12b of the evacuation portion 6 and a top portion 12c of the evacuation port 7.

In one embodiment that is not illustrated, the first operating portion 10 is a single piece.

In the illustrated embodiment, the recess 11 is obtained on a piston body 18 operationally connected to a heat-sensitive element 9a (Figure 2) so as to follow the movement thereof along the longitudinal axis X at a fluid temperature variation perceived by the heat-sensitive element 9a.

The first operating portion 10 comprises, in particular, an inner hole in which a shaft portion of the piston body 18 can slide with clearance.

The heat-sensitive element 9a can be included in the shutter unit 9 and comprises, in particular, a wax actuator (of known type) configured, in particular, to extend (or retract) a drive stem if the detected temperature of the fluid increases (or decreases).

In the illustrated embodiments, the recess 11 extends angularly with respect to the longitudinal axis X by an angle that is smaller than the round angle. In a further embodiment that is not illustrated, the recess can comprise an annular groove (extending over the entire round angle).

In the at least one closure position C, D the protuberance 13 is in contact with a side wall 15 of the recess 11 so as to prevent the transit of fluid (Figures 8, 9, 10 and 11).

The first operating portion 10 and the second operating portion 12 are further configured, in particular, to adopt at least two open positions A, B (i.e. a plurality of successive open positions) included along the stroke 28 in which the protuberance 13 is far from the side wall 15 so as to enable fluid to transit through the fluid-transit gap 9b (Figures 12, 13, 16, 17, 18 and 19).

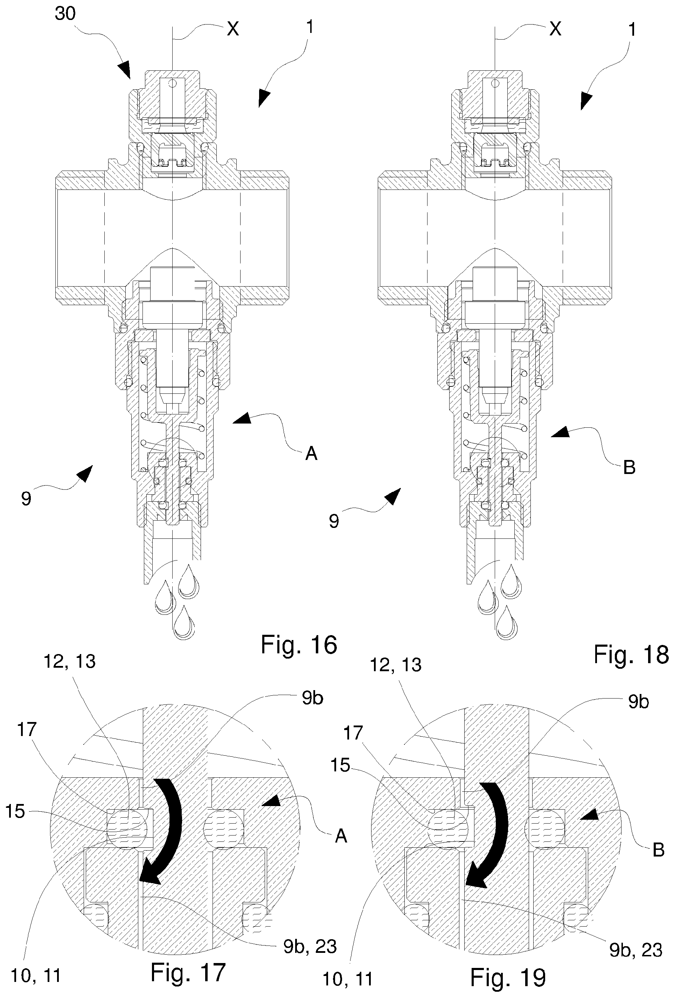

The at least two open positions A, B can comprise by way of non-exhaustive example an open position A (Figures 16, 17) and a second open position B (Figures 18, 19). In the second open position B, the first operating portion 10 is moved upwards (along the longitudinal axis X) with respect to the first open position A.

In these two open positions A, B (and in all the subsequent open positions comprised between these two open positions A, B) the flow rate of evacuated fluid is constant. The transverse gap can have the same area along the stroke 28 so as to enable the fluid to be evacuated at a constant flow rate when the first operating portion 10 is not in one of the closure positions C, D.

The recess 11 has a longitudinal dimension that is greater than a further longitudinal dimension of said protuberance 13 such that the recess 11 can receive the protuberance 13 permitting the transit of fluid in the at least two open positions A, B. The longitudinal dimension and the further longitudinal dimension can be measured along the longitudinal axis X.

In the illustrated embodiments, in the first operating portion 10 a further recess 21 is provided, and in the second operating portion 12 a further protuberance 22 is provided. The further recess 21 is arranged at a lower height than the recess 11 and the further protuberance 22 is arranged at a lower height than the protuberance 13 (Figures 9, 11 and 13).

A distance between the recess 11 and the further recess 21, in particular a distance between the respective side walls 15, is less than a further distance between the protuberance 13 and the further protuberance 22, the distance and the further distance being measured along the longitudinal axis X.

Between the protuberance 11 and the further protuberance 21 (i.e. parallel to the longitudinal axis X) an intermediate fluid-passage portion 23 of the fluid- passage gap 9b (Figures 9, 11 and 13) can be defined. The cross section of the intermediate fluid-passage portion 23 is constant. The cross section of the intermediate fluid- passage portion 23 can be annular.

In the illustrated embodiments, the further protuberance 22 is obtained on a further seal element, like for example an O-ring, housed in a respective further housing seat.

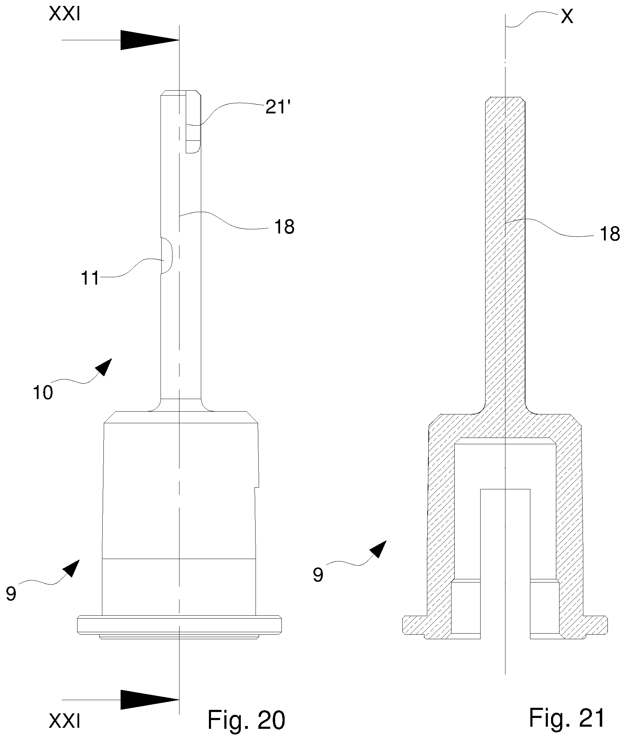

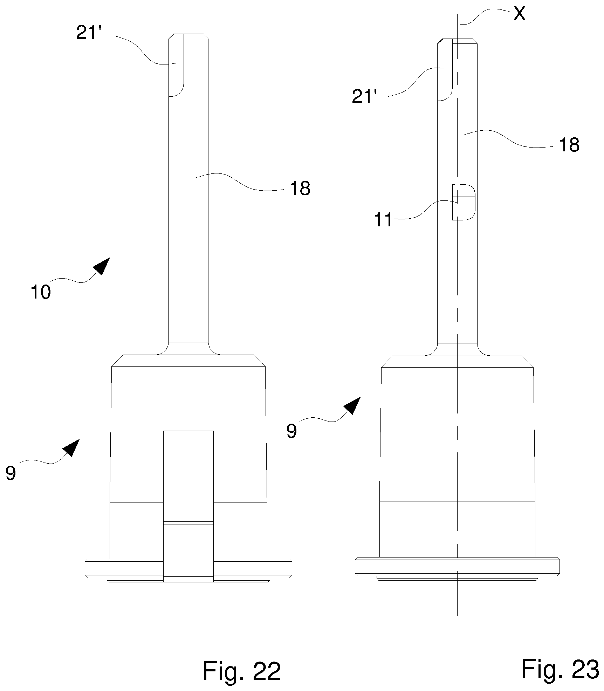

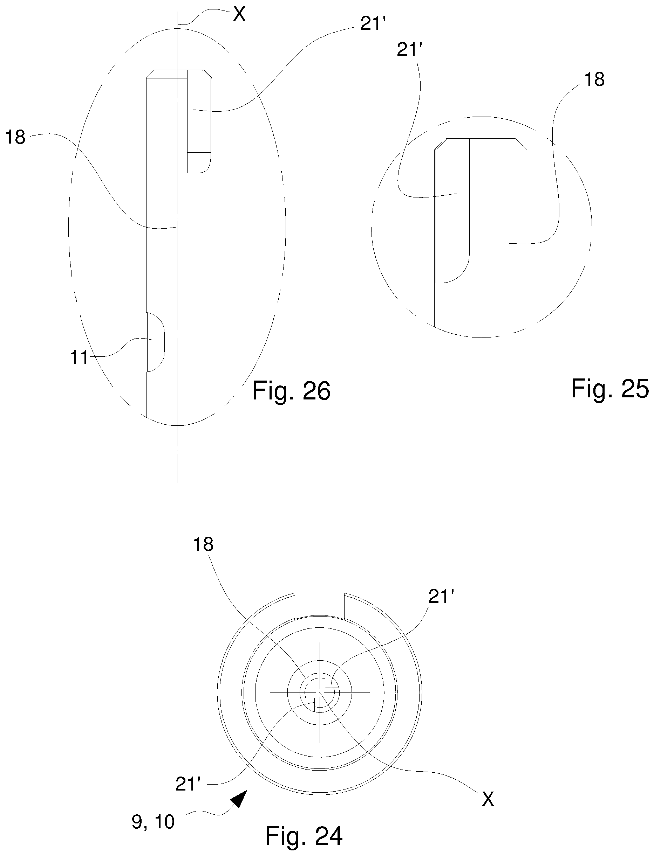

In the embodiment of the shutter unit 9 illustrated in Figures 20-24, a further recess 21 is provided obtained on an end portion of the piston body 18; in this embodiment, several (two) further recesses 21' are provided each of which is provided with a respective opening that, in use, faces downwards. Such further recesses 21' are positioned opposite the longitudinal axis X (Figure 24).

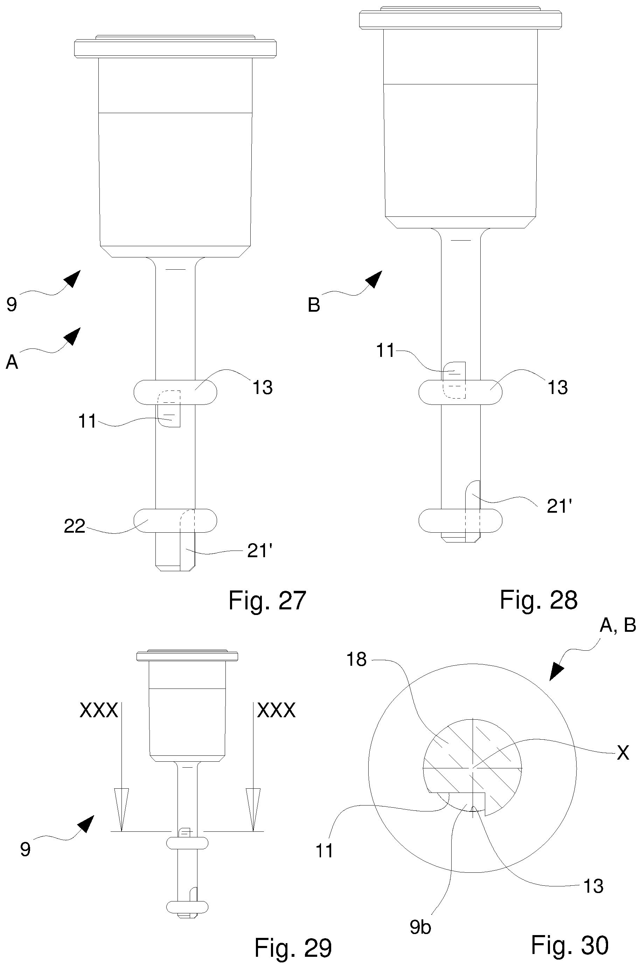

The fluid-passage gap 9b can have a constant transverse gap along the stroke 28 when the first operating portion 10 is not in one of the closure positions C, D (and thus also in the two open positions A, B) at the protuberance 13 and at the further protuberance 22. This transverse gap is defined on a section plane that is transverse, in particular orthogonal, to the longitudinal axis X (Figure 30). The transverse gap at the protuberance 13 (seal element) is bounded by the recess 11 and by the protuberance 13. Similarly, the transverse gap at the further protuberance 22 (further seal element) is bounded by the further recess 21 and by the further protuberance 22. In the embodiment of the shutter unit that provides several further recesses 21', the transverse gap is bounded by the further protuberance 22 and by the further recesses 21'.

In other words, the transverse space of the passage gap 9b taken at the protuberance 13 or the further protuberance 22 or at both protuberance 13 and the further protuberance 22 can have the same area when the first operating portion 10 is not in one of the closure positions C, D (for example when the first operating portion is in one of the open positions A, B defined along the stroke 28) so that the fluid- passage gap 9b is traversed by a constant flow rate.

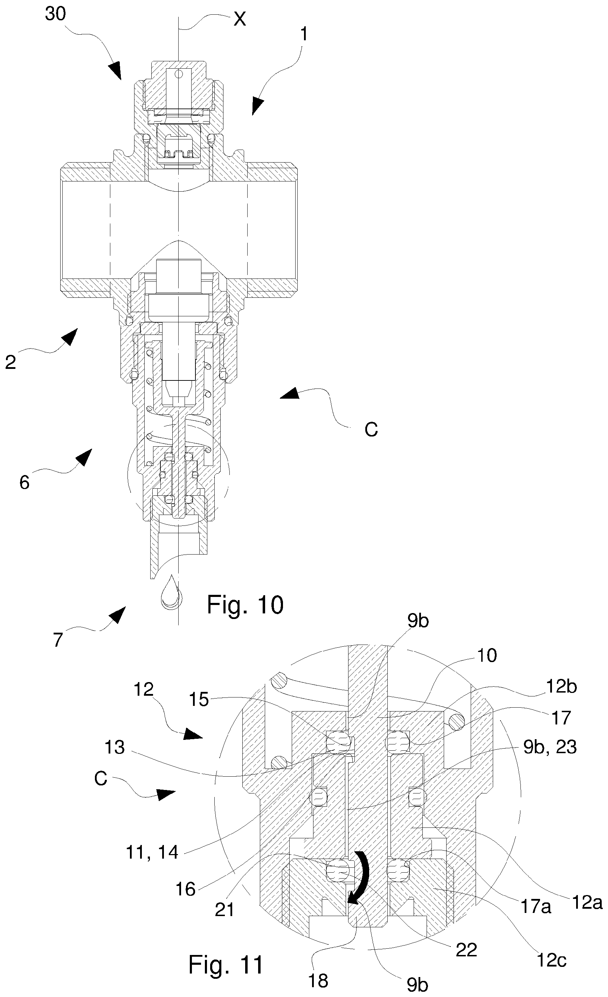

The at least one closure position C, D comprises an intermediate closure position C (Figures 10, 11) in which the further recess 21 and the further protuberance 22 are separated from one another to enable the fluid to transit and enable residual fluid present in the intermediate fluid-passage portion 23 to be emptied through the evacuation port 7, 7', 7" thus preventing freezing of the fluid trapped and the resulting blockage of (or damage to) the shutter unit 9. At the same time, as implied, in the intermediate closure position C, the protuberance 13 and the recess 11 are in reciprocal contact to block a flow of fluid between the second cavity 8 and the intermediate fluid-passage portion 23.

A stroke portion 29 can be provided that can be travelled by the first operating portion 10 along the longitudinal axis X from the intermediate closure position C to a complete closure position D (Figures 8, 9) in which the recess 10 and the protuberance 13 are in reciprocal contact, and the further recess 21 and the further protuberance 22 are in reciprocal contact to prevent the transit of fluid from the hydraulic system to the evacuation port 7, 7', 7". With respect to the intermediate closure position C, in the complete closure position D, the protuberance 13 (O-ring) is pressed with greater force against the recess 11 and can become more deformed.

In a further embodiment that is not illustrated, only the first operating portion 10 and the second operating portion 12 can be provided.

As implied, the heat-sensitive element 9a can be included in the shutter unit 9. The heat-sensitive element 9a can protrude from the second cavity 8 to the first cavity 3 to touch directly a flow of fluid that flows between the first fitting 3 and the second fitting 4 and thus detect the temperature of the fluid in the first cavity 3 (Figure 2).

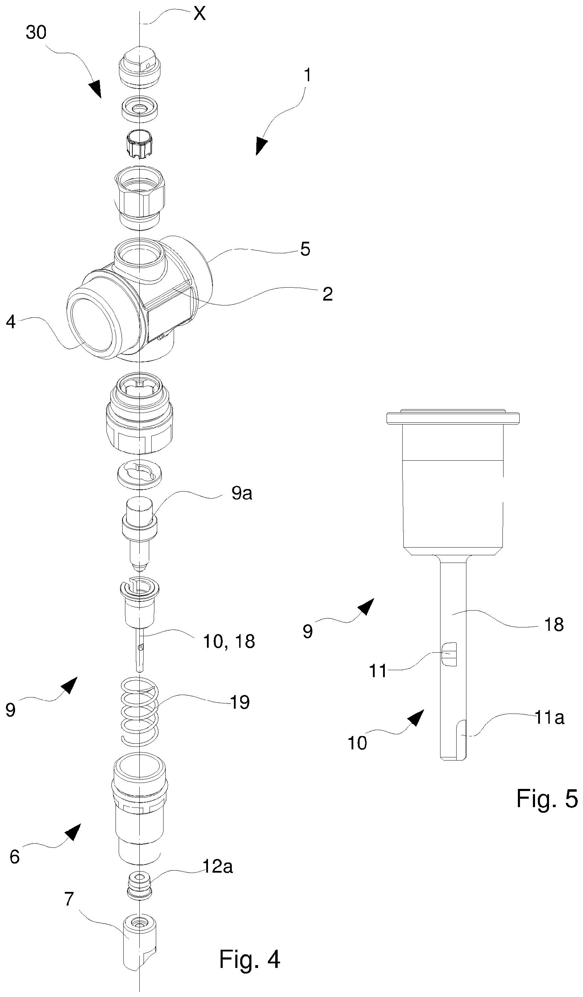

The antifreeze valve 1 comprises, in particular, a single elastic element 19 (Figures 2, 4) positioned operationally between the piston body 18 and an inner surface 20 of the fluid-evacuation portion 6 to exert a longitudinal contrasting force on a longitudinal thermal expansion force associated with the heat-sensitive element 9a, the contrasting force being directed to reaching the intermediate closure position C (or equivalently to reaching the complete closure position D). The single elastic element 19 can comprise a spring.

The first operating portion 10 is obtained on the piston body 18 at a shaft portion that can be treated superficially so as to optimize (reduce) the friction between the piston body 18 and the parts in contact therewith (for example the O-rings). In fact, during operation, i.e. in the transit from the at least one closure position C, D to the open positions A, B the shaft portion can slide against the protuberance 13 (O-ring).

The antifreeze valve 1 comprises, in particular, a depositing groove 24 (Figures 14, 15) near the passage opening 27 (position between the first cavity 3 and the second cavity 8) to prevent detritus present in the fluid entering inside the fluid-passage gap 9b and/or inside further gaps present in the shutter unit 9. This detritus, can in fact prevent correct movement of the shutter unit 9, in particular of the piston body 18.

The depositing groove 24 can be provided with a base surface 25 positioned at a lower height than the passage opening 27 so as to promote the deposit of the detritus inside the depositing groove 24.

In the illustrated embodiments, providing a double O-ring (in the second operating portion 12 and in the further second operating portion 22) contributes to ensuring correct operation (movement) of the shutter unit 9. Particularly if the detritus succeeds in also overflowing from the depositing groove 24. In use, the O-ring on which the protuberance 13 is obtained can block possible detritus that has entered in the second cavity 8 and is directed towards the intermediate fluid-passage portion 23 of the fluid-passage gap 9b.

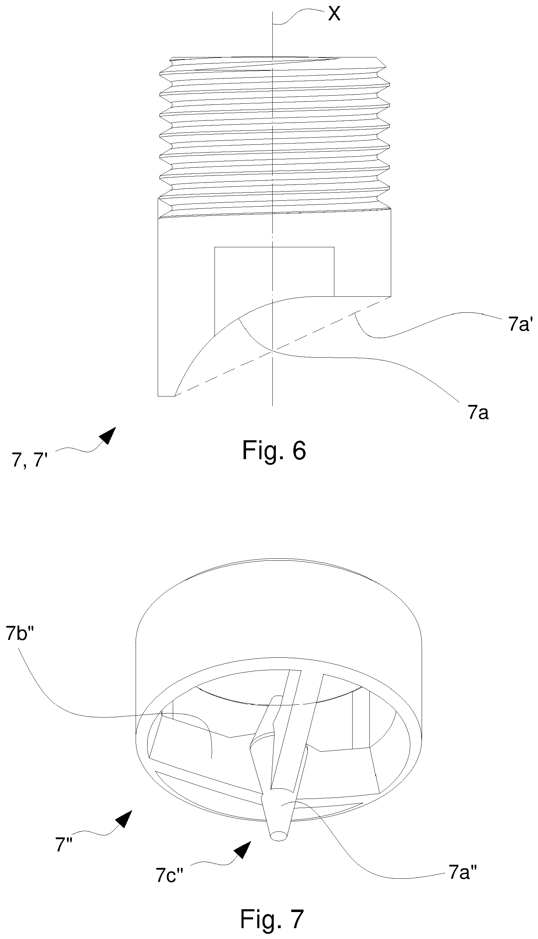

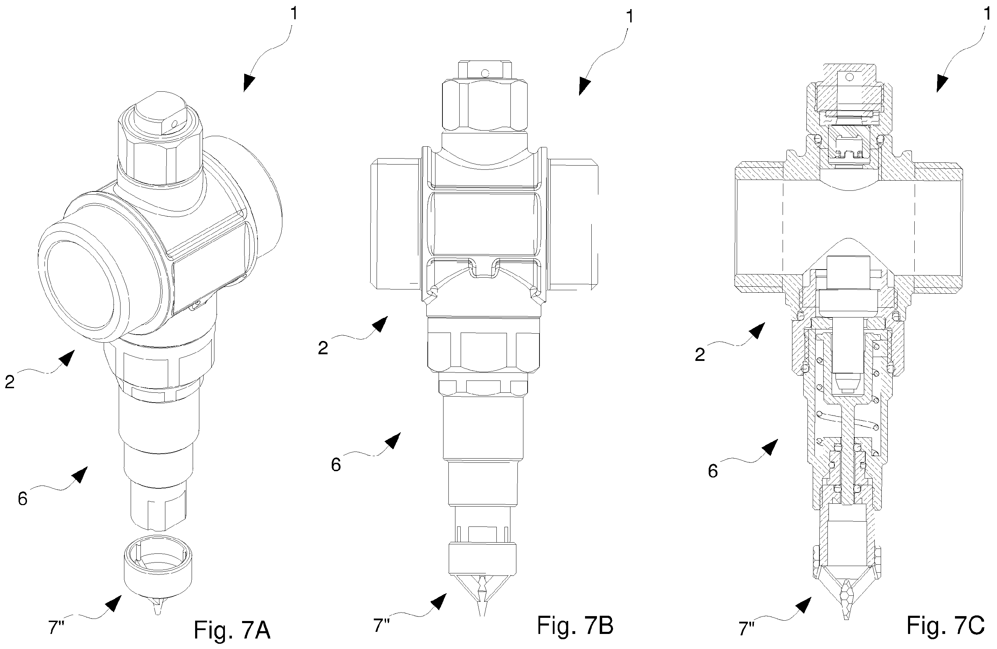

The evacuation port 7, 7', 7" comprises, in particular, a hollow body having a tilted profile 7a, 7a', 7a" (Figures 6, 7), the profile being taken on a median plane of the evacuation port. This profile is tilted with respect to the longitudinal axis X so as to enable the drops of evacuated fluid (evacuated from the evacuation port) adhering to the evacuation port 7, 7', 7" to be collected and to be subsequently removed by gravity from the evacuation port 7, 7', 7".

In the embodiment before the evacuation port 7 illustrated in Figures 1-6, the tilted profile comprises a curved profile 7a that is concave.

In the second embodiment of the evacuation port 7' illustrated in Figure 6 with a dashed line, the tilted profile comprises a substantially rectilinear profile 7a'.

In the third embodiment illustrated in Figures 7, 7A, 7B and 7C, the evacuation port 7" comprises a radial form part 7b". The radial form part 7b" can be provided near the longitudinal axis X of a spindle element 7c". In the illustrated embodiment the spindle element 7c" is centred, and oriented parallel, with respect to the longitudinal axis X. In a further embodiment of the evacuation port, the spindle element 7c" can be offset with respect to the longitudinal axis X.

The evacuation port 7, 7', 7" can also be applied to valves or hydraulic devices that are different from the antifreeze valve 1. In other words, the evacuation port 7, 7', 7" can be used for other applications where the need is felt to promote removing of drops of fluid and avoid an accumulation of stagnant fluid in specific surface zones. For example, the evacuation port 7, 7', 7" can be installed at the end of a water delivery pipe.

In the first and in the second embodiment of the evacuation port 7, 7', the substantially cylindrical body is of the threaded connection type (like the one shown in Figure 6); the profile - in these two embodiments - can be obtained directly on the substantially cylindrical body.

In the third embodiment the tilted profile is obtained on the radiuses of the radial form part 7b" and/or on the spindle body 7c". In the embodiment illustrated in Figure 7, three radiuses are provided. In a further embodiment that is not illustrated, two or four or five or six or N radiuses can be provided, in which N is a integer positive number. These radiuses extend from the periphery of the radial form part 7b" as far as the spindle element 7c". In use, the drops of fluid move by the force of gravity following the tilt of the profile - and at the same time still adhere to the profile - from the radiuses as far as the spindle element 7c", at which they collect, and, given the relatively small adhesion surface on the tip of the spindle element, they abandon the evacuation port 7" as they fall.

In the embodiment illustrated in Figures 7A, 7B and 7C, an extension part 7d is provided for interconnecting the evacuation port 7" to the fluid-evacuation portion 6. In this embodiment, the evacuation port 7" can be so fitted by interference to the extension part 7d that the substantially cylindrical body surrounds this lower end.

In one embodiment that is not illustrated, the evacuation port 7" can be fitted directly to a lower end of the fluid-evacuation portion 6.

In further alternative embodiments that are not illustrated, the evacuation port 7" can so fitted with interference that the lower end a lower end of the fluid-evacuation portion 6 (or the extension part 7d) surrounds the substantially cylindrical body. In other words, in these alternative embodiments that are not illustrated, the evacuation port 7" can be inserted at least partially inside the lower end of the fluid-evacuation portion 6, or inside the extension part 7d.

The antifreeze valve 1 comprises, in particular, a vacuum-break valve 30 (Figures 1, 2, 4) configured, in particular, to enable outside air to enter the first cavity 3 and facilitate the evacuation of water from the evacuation port 7, 7', 7" when the shutter unit 9 is in open position A, B. The vacuum-break valve 30 can be installed in a top portion of the casing body 2 so as to be operationally connected to the first cavity 3.

The operation of the antifreeze valve 1 will be disclosed below in function of the temperature of the fluid circulating in the hydraulic system, for the sake of explanatory simplicity, reference will be made to water.

In use, water flows in the hydraulic system at an operating temperature that is far from the freezing temperature of the water. The heat-sensitive element 9a detects this temperature and the stem of the heat-sensitive element 9a is in an extended configuration. In this condition of normal operation the shutter unit 9 of the antifreeze valve 1 is in the complete closure position D in which the exit of water from the evacuation port 7 is prevented (Figures 8 and 9). In this condition of normal operation the first operating portion 10 and the second operating portion 12 are in reciprocal contact both at the first protuberance 13 and at the further protuberance 22.

With a drop in temperature, i.e. with the water in a thermal condition near freezing, the stem of the heat-sensitive element 9a starts to retract. In this thermal condition, the shutter unit 9 of the antifreeze valve 1 adopts the intermediate closure position C (Figures 10 and 11) in which the exit of water from the evacuation port 7 continues to be prevented by the reciprocal contact between the protuberance 13 (O-ring) and the recess 11. In the intermediate closure position C the further protuberance 22 and the further recess 21 are separate from one another and the intermediate portion 23 of the fluid-passage gap 9b is in fluid communication with the environment outside the antifreeze valve 1. Between the complete closure position D and the intermediate closure position C, the first operating portion 10 performs the stroke portion 29 (Figure 9).

Subsequently (depending on the response time of the heat-sensitive element 9a to the temperature variations) the stem of the heat-sensitive element 9a continues to retract. In this condition, the shutter unit 9 adopts a first open position A (Figures 16, 17) in which both the protuberance 13 - recess 11 combination and the further protuberance 22 - further recess 21 combination are separate from one another, permitting a set flow rate to be evacuated through the fluid-passage gap 9b.

The stem of the heat-sensitive element 9a (owing to the temperature of the water) can continue to retract further until it makes the shutter unit adopt a second open position B (Figures 18, 19). Also in the second open position B in which both the protuberance 13 - recess 11 combination and the further protuberance 22 - further recess 21 combination are far from one another to permit the flow rate to be evacuated to the first open position A through the fluid-passage gap 9b.

In the second open position B, the first operating portion 10 is moved (along the longitudinal axis X) upwards with respect to the first open position A.

The first operating portion 10 moves along the stroke 28 from the intermediate closure position C as far as the second open position B.

In a subsequent condition of restoration of the normal operating condition, i.e. raising of the temperature of the water, starting from the open positions A, B, the shutter unit 9 adopts the intermediate closure position C and then the complete closure position D associated with the normal operation of the hydraulic system. In the restored condition, in the intermediate closure position C the intermediate portion of the fluid-passage gap 9b (the intermediate portion 23) is emptied, preventing damage due to the expansion of the trapped water when the condition of freezing of the water recurs; this occurs before the shutter unit 9 adopts the complete closure position D.

In particular, the thus configured antifreeze valve 1, particularly owing to the fluid-passage gap 9b that extends parallel to the longitudinal axis X, ensures a transit of fluid at a constant flow rate independently of the position of the first operating portion 10 along the stroke 28. Owing to the synergy of the first operating portion 10 and of the second operating portion 12, it is possible to ensure a constant flow rate of evacuated water even if the operating portion 10 is in different positions (open positions A, B) along the stroke 28.

The specific configuration and conformation of the shutter unit 9, and in particular of the fluid-passage gap 9b, enables current antifreeze valves for hydraulic systems to be improved, particularly enables a set flow rate of water to be drained, so as to optimize (reduce) water wastage, at the same time increasing the repeatability of the operation of evacuating water from the hydraulic system.

Further, the specific configuration and arrangement of the heat-sensitive element 9a in the first cavity 3 enables a relatively short response time of the heat-sensitive element 9a to the temperature variations of the fluid circulating in the hydraulic system to be obtained and thus a relatively rapid actuation/movement of the movable parts of the shutter unit 9 to be obtained.

Further, the surface treatment of the piston body 18 enables rapidity and precision of movement of the first operating portion 10 with respect to the second operating portion 12 (O-ring) to be conferred.

Further, owing to the provision of a single elastic element 19, it is possible to obtain a compact and constructionally simple antifreeze valve 1, having a relatively reduced number of components.

Further, providing the depositing groove 24 near the transit opening 27 enables the entry of detritus inside the fluid-passage gap 9b and/or inside further gaps present in the shutter unit 9 to be avoided.

Further, providing the O-ring in the protuberance 13 enables possible detritus (not blocked by the depositing groove 25) to be blocked that is directed to the intermediate fluid-transit portion 23 of the fluid- passage gap 9b.

The synergy between, and the mutual positioning of, the recesses 11, 21, 21' and the protuberance 13, 22 in the intermediate closure position C enables the fluid trapped in the intermediate fluid- passage portion 23 to be emptied through the evacuation port 7, 7', 7" and prevents this fluid from freezing and resulting blocking of (or damage to) the shutter unit 9.

Further, the specific conformation of the evacuation port 7, 7', 7" permits complete evacuation of the fluid, thus also eliminating the residual drops of exiting fluid.

## Claims

1. Antifreeze valve (1) for a hydraulic system, including:
- a casing body (2) defining a first cavity (3) and provided with a first fitting (4) for the entry of a fluid, such as water, coming from a first hydraulic system branch, with a second fitting (5) for the exit of fluid from said first cavity (3) to a second branch of said hydraulic system;
- a fluid-evacuation portion (6) that protrudes from said casing body (2) along a longitudinal axis (X) and is provided with an evacuation port (7; 7'; 7"), said fluid-evacuation portion (6) defining internally a second cavity (8) in fluid communication with said first cavity (3);
- a heat-sensitive shutter unit (9) housed in said second cavity (8) and configured to enable a fluid flowrate to be evacuated through said evacuation port (7; 7'; 7") when a minimum temperature is reached avoiding said fluid freezing and damaging said hydraulic system;
wherein said shutter unit (9) comprises a first operating portion (10) that is movable along said longitudinal axis (X), and a second operating portion (12) that is stationary, said first operating portion (10) and said second operating portion (12) facing one another to define a fluid-passage gap (9b) that extends parallel to said longitudinal axis (X), said first operating portion (10) and said second operating portion (12) being configured to stop the transit of fluid along said fluid-passage gap (9b) in at least one closure position (C, D) in normal operating conditions, and to enable the transit of said fluid along said fluid-passage gap (9b) on the movement of said first operating portion (10) relatively to said second operating portion (12) along a stroke (28) in at least two open positions (A, B) which are different from one another,
**characterised in that** said fluid-passage gap (9b) is conformed with a tubular cross-section so as to define a fluid-passage transverse opening that is constant along said stroke (28) to ensure a transit of fluid at a constant flow rate independently of the position of said first operating portion (10) along said stroke (28) when said first operating portion (10) is not in at least one closure position (C, D), the transit of said fluid being at a constant flow rate between said at least two open positions (A, B), and in all the subsequent open positions comprised between said at least two open positions (A, B),
**in that** said first operating portion (10) is provided with a recess (11) and said second operating portion (12) is provided with a protuberance (13), said first and second operating portion (10, 12) facing one another so that said protuberance (13) is at least partially received in said recess (11); and wherein in said first operating portion (10) a further recess (21; 21') is provided and wherein in said second operating portion (12) a further protuberance (22) is provided, said further recess (21; 21') being arranged at a lower height than said recess (11) and said further protuberance (22) being arranged at a lower height than said protuberance (13),
**in that** a distance between said recess (11) and said further recess (21; 21') is less than a further distance between said protuberance (13) and said further protuberance (22), said distance and said further distance being measured along said longitudinal axis (X),
**in that** between said protuberance (13) and said further protuberance (22) an intermediate fluid-passage portion (23) of said fluid- passage gap (9b) is defined, and **in that** said at least one closure position (C, D) comprises an intermediate closure position (C) in which said protuberance (13) is in contact with a part of said recess (11) to block the fluid coming from said second cavity (8), and wherein said further recess (21; 21') and said further protuberance (22) are separated from one another to enable fluid to transit and enable residual fluid present in said intermediate fluid-passage portion (23) to be emptied through the evacuation port (7; 7'; 7"); and wherein a stroke portion (29) is provided that can be travelled by said first operating portion (10) along said longitudinal axis (X) from said first intermediate closure position (C) to a complete closure position (D) in which both said recess (10) and said protuberance (13) are in reciprocal contact, and said further recess (21; 21') and said further protuberance (22) are in reciprocal contact to prevent the fluid transiting from said hydraulic system to said evacuation port (7; 7'; 7").

2. Antifreeze valve (1) according to claim 1, wherein said protuberance (13) protrudes transversely to said longitudinal axis (X) to a bottom surface (14) of said recess (11).

3. Antifreeze valve (1) according to claim 1 or 2, wherein in said at least one closure position (C, D), said protuberance (13) is in contact with a side wall (15) of said recess (11) so as to prevent the transit of fluid; and wherein said first operating portion (10) and said second operating portion (12) are configured to adopt said at least two open positions (A, B) included along said stroke (28) in which said protuberance (13) is far from said side wall (15) so as to enable fluid to transit through said fluid-transit gap (9b).

4. Antifreeze valve (1) according to claim 2 or 3, wherein said recess (11) has a longitudinal dimension that is greater than a further longitudinal dimension of said protuberance (13), so that said recess (11) can receive said protuberance (13) enabling fluid to flow into said at least two open positions (A, B), said longitudinal dimension and said further longitudinal dimension being measured along said longitudinal axis (X).

5. Antifreeze valve (1) according to any one of claims 2 to 4, wherein said protuberance (13) is obtained on an annular seal element housed in a respective seat (17); and wherein said recess (11) is obtained on a piston body (18) connected to a heat-sensitive element (9a) so as to follow the movement thereof along said longitudinal axis (X) at a fluid temperature variation perceived by said heat-sensitive element (9a).

6. Antifreeze valve (1) according to any one of claims 2 to 5, wherein said recess (11) extends angularly with respect to said longitudinal axis (X) by an angle that is smaller than the round angle.

7. Antifreeze valve (1) according to any one of the preceding claims, wherein said shutter unit (9) comprises a heat-sensitive element (9a) that protrudes from said second cavity (8) to said first cavity (3) to touch directly a flow of fluid that flows between said first fitting (4) and said second fitting (5) and thus detect the temperature of the fluid in said first cavity (3).

8. Antifreeze valve (1) according to claim 7, comprising a single elastic element (19) positioned operationally between said piston body (18) and an inner surface (20) of said fluid-evacuation portion (6) to exert a longitudinal contrasting force on a longitudinal thermal expansion force associated with said heat-sensitive element (9a), said contrasting force being directed to reach said at least one closure position (C, D).

9. Antifreeze valve (1) according to any one of the preceding claims, comprising a depositing groove (24) near a passage opening (27) between said first cavity (3) and said second cavity (8) to prevent the entry of detritus present inside said fluid-passage gap (9b) and/or inside further gaps present in said shutter unit (9), said depositing groove (24) being provided with a base surface (25) positioned at a lower height than said passage opening (27) so as to promote depositing of said detritus inside said depositing groove (24).

10. Antifreeze valve (1) according to any one of the preceding claims, wherein said evacuation port (7; 7'; 7") comprises a hollow body having a tilted profile (7a; 7a'; 7a"), said profile being taken on a median plane of said evacuation port (7; 7'; 7"), said profile being tilted with respect to said longitudinal axis (X) so as to enable the drops of evacuated fluid adhering to said evacuation port (7; 7'; 7") to be collected and said drops to be removed by gravity from said evacuation port (7; 7'; 7").

11. Antifreeze valve (1) according to claim 10, wherein said tilted profile (7a; 7a'; 7a") comprises a curved profile (7a), said curved profile (7a) being concave.

12. Antifreeze valve (1) according to claim 10, wherein said tilted profile (7a; 7a'; 7a") comprises a substantially rectilinear profile (7a').

13. Antifreeze valve (1) according to one of claims 10 to 12, wherein said evacuation port (7") comprises a radial form part (7b"), said radial form part (7b") being provided near said longitudinal axis (X) with a spindle element (7c").

## Patentansprüche

1. Frostschutzventil (1) für ein hydraulisches System, umfassend:
- einen Gehäusekörper (2), der einen ersten Hohlraum (3) definiert und mit einem ersten Anschluss (4) für den Einlass eines Fluids, wie beispielsweise Wasser, aus einem ersten Zweig des hydraulischen Systems sowie mit einem zweiten Anschluss (5) für den Auslass von Fluid aus dem ersten Hohlraum (3) zu einem zweiten Zweig des hydraulischen Systems versehen ist;
- einen Fluid-Entleerabschnitt (6), der entlang einer Längsachse (X) von dem Gehäusekörper (2) hervorragt und mit einer Entleeröffnung (7; 7'; 7") versehen ist, wobei der Fluid-Entleerabschnitt (6) im Inneren einen zweiten Hohlraum (8) definiert, der in Fluidverbindung mit dem ersten Hohlraum (3) steht;
- eine wärmeempfindliche Verschlusseinheit (9), die in dem zweiten Hohlraum (8) untergebracht und dazu ausgebildet ist, die Entleerung des Fluidstroms über die Entleeröffnung (7; 7'; 7") zu ermöglichen, wenn eine Mindesttemperatur erreicht ist, um ein Einfrieren des Fluids und eine Beschädigung des hydraulischen Systems zu vermeiden;
wobei die Verschlusseinheit (9) einen ersten Betriebsabschnitt (10), der entlang der Längsachse (X) beweglich ist, und einen zweiten Betriebsabschnitt (12) umfasst, der ortsfest ist, wobei der erste Betriebsabschnitt (10) und der zweite Betriebsabschnitt (12) einander zugewandt sind, um einen Fluid-Durchlassspalt (9b) bilden, der sich parallel zur Längsachse (X) erstreckt, wobei der erste Betriebsabschnitt (10) und der zweite Betriebsabschnitt (12) dazu ausgebildet sind, den Durchfluss des Fluids entlang des Fluid-Durchlassspalts (9b) in mindestens einer Schließposition (C, D) unter normalen Betriebsbedingungen zu unterbinden und bei einer Bewegung des ersten Betriebsabschnitts (10) relativ zum zweiten Betriebsabschnitt (12) entlang eines Hubs (28) in mindestens zwei voneinander unterschiedlichen Öffnungspositionen (A, B) den Durchfluss des Fluids entlang des Fluid-Durchlassspalts (9b) zu ermöglichen,
**dadurch gekennzeichnet, dass** der Fluid-Durchlassspalt (9b) einen rohrförmigen Querschnitt aufweist, um eine Fluid-Durchgangs-Queröffnung zu definieren, die entlang des Hubs (28) konstant ist, um einen Fluiddurchfluss mit konstanter Durchflussrate unabhängig von der Position des ersten Betriebsabschnitts (10) entlang des Hubs (28) zu gewährleisten, wenn sich der erste Betriebsabschnitt (10) nicht in mindestens einer Schließposition (C, D) befindet, wobei der Durchfluss des Fluids zwischen den mindestens zwei Öffnungspositionen (A, B) sowie in allen nachfolgenden Öffnungspositionen, die zwischen den mindestens zwei Öffnungspositionen (A, B) liegen, mit konstanter Durchflussrate erfolgt,
dass der erste Betriebsabschnitt (10) mit einer Aussparung (11) und der zweite Betriebsabschnitt (12) mit einem Vorsprung (13) versehen ist, wobei der erste und der zweite Betriebsabschnitt (10, 12) einander so zugewandt sind, dass der Vorsprung (13) zumindest teilweise in der Aussparung (11) aufgenommen ist; und wobei in dem ersten Betriebsabschnitt (10) eine weitere Aussparung (21; 21') vorgesehen ist und wobei in dem zweiten Betriebsabschnitt (12) ein weiterer Vorsprung (22) vorgesehen ist, wobei die weitere Aussparung (21; 21') auf einer niedrigeren Höhe als die Aussparung (11) und der weitere Vorsprung (22) auf einer niedrigeren Höhe als der Vorsprung (13) angeordnet ist,
dass ein Abstand zwischen der Aussparung (11) und der weiteren Aussparung (21; 21') kleiner ist als ein weiterer Abstand zwischen dem Vorsprung (13) und dem weiteren Vorsprung (22), wobei der Abstand und der weitere Abstand entlang der Längsachse (X) gemessen werden,
dass zwischen dem Vorsprung (13) und dem weiteren Vorsprung (22) ein mittlerer Fluiddurchgangsabschnitt (23) des Fluid-Durchlassspalts (9b) definiert ist, und dass die mindestens eine Schließposition (C, D) eine Zwischen-Schließposition (C) umfasst, in der der Vorsprung (13) mit einem Teil der Aussparung (11) in Kontakt steht, um das aus dem zweiten Hohlraum (8) kommende Fluid zu blockieren, und wobei die weitere Aussparung (21; 21') und der weitere Vorsprung (22) voneinander getrennt sind, um einen Fluiddurchfluss zu ermöglichen und das Entleeren von in dem mittleren Fluiddurchgangsabschnitt (23) vorhandenem Restfluid durch die Entleeröffnung (7; 7'; 7") zu ermöglichen; und wobei ein Hubabschnitt (29) vorgesehen ist, den der erste Betriebsabschnitt (10) entlang der Längsachse (X) von der ersten Zwischen-Schließposition (C) bis zu einer vollständigen Schließposition (D) zurücklegen kann, in der sowohl die Aussparung (10) als auch der Vorsprung (13) in gegenseitigem Kontakt stehen, und die weitere Aussparung (21; 21') und der weitere Vorsprung (22) in gegenseitigem Kontakt stehen, um zu verhindern, dass das Fluid aus dem hydraulischen System zur Entleeröffnung (7; 7'; 7") gelangt.

2. Frostschutzventil (1) nach Anspruch 1, wobei der Vorsprung (13) quer zur Längsachse (X) zu einer Bodenfläche (14) der Aussparung (11) hin vorsteht.

3. Frostschutzventil (1) nach Anspruch 1 oder 2, wobei in der mindestens einen Schließposition (C, D) der Vorsprung (13) mit einer Seitenwand (15) der Aussparung (11) in Kontakt steht, um den Durchfluss von Fluid zu verhindern; und wobei der erste Betriebsabschnitt (10) und der zweite Betriebsabschnitt (12) dazu ausgebildet sind, die mindestens zwei entlang des Hubs (28) vorgesehenen Öffnungspositionen (A, B) einzunehmen, in denen der Vorsprung (13) von der Seitenwand (15) entfernt ist, um den Durchfluss von Fluid durch den Fluid-Durchflussspalt (9b) zu ermöglichen.

4. Frostschutzventil (1) nach Anspruch 2 oder 3, wobei die Aussparung (11) eine Längsabmessung aufweist, die größer ist als eine weitere Längsabmessung des Vorsprungs (13), sodass die Aussparung (11) den Vorsprung (13) aufnehmen kann, wodurch Fluid in die mindestens zwei Öffnungspositionen (A, B) strömen kann, wobei die Längsabmessung und die weitere Längsabmessung entlang der Längsachse (X) gemessen werden.

5. Frostschutzventil (1) nach einem der Ansprüche 2 bis 4, wobei der Vorsprung (13) an einem ringförmigen Dichtelement ausgebildet ist, das in einem entsprechenden Sitz (17) untergebracht ist; und wobei die Aussparung (11) an einem Kolbenkörper (18) ausgebildet ist, der mit einem wärmeempfindlichen Element (9a) verbunden ist, um dessen Bewegung entlang der Längsachse (X) bei einer vom wärmeempfindlichen Element (9a) erfassten Fluid-Temperaturänderung zu folgen.

6. Frostschutzventil (1) nach einem der Ansprüche 2 bis 5, wobei sich die Aussparung (11) in Bezug auf die Längsachse (X) um einen Winkel erstreckt, der kleiner ist als der Rundwinkel.

7. Frostschutzventil (1) nach einem der vorstehenden Ansprüche, wobei die Verschlusseinheit (9) ein wärmeempfindliches Element (9a) umfasst, das aus dem zweiten Hohlraum (8) in den ersten Hohlraum (3) hineinragt, um direkt mit einem FluidStrom in Kontakt zu kommen, der zwischen dem ersten Anschluss (4) und dem zweiten Anschlussstück (5) strömt, und somit die Temperatur des Fluids im ersten Hohlraum (3) zu erfassen.

8. Frostschutzventil (1) nach Anspruch 7, umfassend ein einzelnes elastisches Element (19), das funktionsmäßig zwischen dem Kolbenkörper (18) und einer Innenfläche (20) des Fluid-Entleerabschnitts (6) angeordnet ist, um eine Längsgegenkraft auf eine mit dem wärmeempfindlichen Element (9a) verbundene Längsthermische Ausdehnungskraft auszuüben, wobei die Gegenkraft so gerichtet ist, dass sie die mindestens eine Schließposition (C, D) erreicht.

9. Frostschutzventil (1) nach einem der vorstehenden Ansprüche, umfassend eine Ablagerungsnut (24) in der Nähe einer Durchgangsöffnung (27) zwischen dem ersten Hohlraum (3) und dem zweiten Hohlraum (8), um das Eindringen von Schmutz zu verhindern, der sich innerhalb des Fluid-Durchlassspalts (9b) und/oder innerhalb weiterer Spalte in der Verschlusseinheit (9) befindet, wobei die Ablagerungsnut (24) mit einer Grundfläche (25) versehen ist, die auf einer niedrigeren Höhe als die Durchgangsöffnung (27) angeordnet ist, um das Ablagern des Schmutzes in der Ablagerungsnut (24) zu begünstigen.

10. Frostschutzventil (1) nach einem der vorstehenden Ansprüche, wobei die Entleeröffnung (7; 7'; 7") einen Hohlkörper mit einem geneigten Profil (7a; 7a'; 7a" aufweist, wobei dieses Profil in einer Mittelebene der Entleeröffnung (7; 7'; 7") verläuft und in Bezug auf die Längsachse (X) geneigt ist, um das Sammeln der an der Entleeröffnung (7; 7'; 7") anhaftenden Tropfen des entleerten Fluids und die Entfernung dieser Tropfen durch Schwerkraft aus der Entleeröffnung (7; 7'; 7") zu ermöglichen.

11. Frostschutzventil (1) nach Anspruch 10, wobei das geneigte Profil (7a; 7a'; 7a") ein gekrümmtes Profil (7a) umfasst, wobei das gekrümmte Profil (7a) konkav ist.

12. Frostschutzventil (1) nach Anspruch 10, wobei das geneigte Profil (7a; 7a'; 7a") ein im Wesentlichen geradliniges Profil (7a') umfasst.

13. Frostschutzventil (1) nach einem der Ansprüche 10 bis 12, wobei die Entleeröffnung (7") ein radiales Formteil (7b") umfasst, wobei das radiale Formteil (7b") nahe der Längsachse (X) mit einem Spindelelement (7c") versehen ist.

## Revendications

1. - Soupape antigel (1) pour un système hydraulique, comprenant :
- un corps de boîtier (2) définissant une première cavité (3) et comportant un premier raccord (4) pour l'entrée d'un fluide, tel que de l'eau, provenant d'une première ramification du système hydraulique, ainsi qu'un second raccord (5) pour la sortie de fluide en provenance de ladite première cavité (3) vers une seconde ramification dudit système hydraulique ;
- une partie d'évacuation de fluide (6) qui fait saillie à partir dudit corps de boîtier (2) le long d'un axe longitudinal (X) et qui comporte un orifice d'évacuation (7 ; 7' ; 7"), ladite partie d'évacuation de fluide (6) définissant intérieurement une seconde cavité (8) en communication fluidique avec ladite première cavité (3) ;
- une unité d'obturation thermosensible (9) logée dans ladite seconde cavité (8) et configurée pour permettre un débit de fluide d'être évacué à travers ledit orifice d'évacuation (7 ; 7' ; 7") lorsqu'une température minimale est atteinte, évitant le gel dudit fluide et l'endommagement dudit système hydraulique ;
dans laquelle ladite unité d'obturation (9) comprend une première partie fonctionnelle (10) qui est mobile le long dudit axe longitudinal (X), et une seconde partie fonctionnelle (12) qui est fixe, ladite première partie fonctionnelle (10) et ladite seconde partie fonctionnelle (12) se faisant face l'une l'autre pour définir un intervalle de passage de fluide (9b) qui s'étend parallèlement audit axe longitudinal (X), ladite première partie fonctionnelle (10) et ladite seconde partie fonctionnelle (12) étant configurées pour arrêter le transit de fluide le long dudit intervalle de passage de fluide (9b) dans au moins une position de fermeture (C, D) dans des conditions normales de fonctionnement, et pour permettre le transit dudit fluide le long dudit intervalle de passage de fluide (9b) lors du déplacement de ladite première partie fonctionnelle (10) par rapport à ladite seconde partie fonctionnelle (12) le long d'une course (28) dans au moins deux positions d'ouverture (A, B) qui sont différentes l'une de l'autre,
**caractérisée par le fait que** ledit intervalle de passage de fluide (9b) est conformé à une section transversale tubulaire de manière à définir une ouverture transversale de passage de fluide qui est constante le long de ladite course (28) afin d'assurer un transit de fluide à un débit constant indépendamment de la position de ladite première partie opérationnelle (10) le long de ladite course (28) lorsque ladite première partie fonctionnelle (10) ne se trouve pas dans au moins une position de fermeture (C, D), le transit dudit fluide étant à un débit constant entre lesdites au moins deux positions d'ouverture (A, B), et dans toutes les positions d'ouverture suivantes comprises entre lesdites au moins deux positions d'ouverture (A, B),
**par le fait que** ladite première partie fonctionnelle (10) comporte un renfoncement (11) et ladite seconde partie fonctionnelle (12) comporte une protubérance (13), lesdites première et seconde parties fonctionnelles (10, 12) se faisant face l'une l'autre de telle sorte que ladite protubérance (13) est au moins partiellement reçue dans ledit renfoncement (11) ; et, dans ladite première partie fonctionnelle (10), un autre renfoncement (21 ; 21') étant prévu et, dans ladite seconde partie fonctionnelle (12), une autre protubérance (22) étant prévue, ledit autre renfoncement (21 ; 21') étant disposé à une hauteur inférieure à celle dudit renfoncement (11) et ladite autre protubérance (22) étant disposée à une hauteur inférieure à celle de ladite protubérance (13),
**par le fait qu'**une distance entre ledit renfoncement (11) et ladite autre protubérance (21 ; 21') est inférieure à une autre distance entre ladite protubérance (13) et ladite autre protubérance (22), ladite distance et ladite autre distance étant mesurées le long dudit axe longitudinal (X),
**par le fait qu'**entre ladite protubérance (13) et ladite autre protubérance (22), une partie intermédiaire de passage de fluide (23) dudit intervalle de passage de fluide (9b) est définie, et **par le fait que** ladite au moins une position de fermeture (C, D) comprend une position de fermeture intermédiaire (C) dans laquelle ladite protubérance (13) est en contact avec une partie dudit renfoncement (11) afin de bloquer le fluide provenant de ladite seconde cavité (8), et ledit autre renfoncement (21 ; 21') et ladite autre protubérance (22) étant séparés l'un de l'autre pour permettre le transit de fluide et permettre au fluide résiduel présent dans ladite partie intermédiaire de passage de fluide (23) d'être vidé à travers l'orifice d'évacuation (7 ; 7' ; 7") ; et une partie de course (29) étant prévue qui peut être parcourue par ladite première partie fonctionnelle (10) le long dudit axe longitudinal (X) depuis ladite première position intermédiaire de fermeture (C) jusqu'à une position de fermeture complète (D) dans laquelle à la fois ledit renfoncement (10) et ladite protubérance (13) sont en contact réciproque, et ledit autre renfoncement (21 ; 21') et ladite autre protubérance (22) sont en contact réciproque pour empêcher le fluide de transiter dudit système hydraulique vers ledit orifice d'évacuation (7 ; 7' ; 7").

2. - Soupape antigel (1) selon la revendication 1, dans laquelle ladite protubérance (13) fait saillie transversalement audit axe longitudinal (X) vers une surface inférieure (14) dudit renfoncement (11).

3. - Soupape antigel (1) selon la revendication 1 ou 2, dans laquelle, dans ladite au moins une position de fermeture (C, D), ladite protubérance (13) est en contact avec une paroi latérale (15) dudit renfoncement (11) de manière à empêcher le transit de fluide ; et dans laquelle ladite première partie fonctionnelle (10) et ladite seconde partie fonctionnelle (12) sont configurées pour adopter lesdites au moins deux positions d'ouverture (A, B) incluses le long de ladite course (28) dans lesquelles ladite protubérance (13) est éloignée de ladite paroi latérale (15) de manière à permettre au fluide de transiter à travers ledit intervalle de passage de fluide (9b).

4. - Soupape antigel (1) selon la revendication 2 ou 3, dans laquelle ledit renfoncement (11) présente une dimension longitudinale qui est supérieure à une autre dimension longitudinale de ladite protubérance (13), de sorte que ledit renfoncement (11) puisse recevoir ladite protubérance (13), permettant au fluide de s'écouler dans lesdites au moins deux positions d'ouverture (A, B), ladite dimension longitudinale et ladite autre dimension longitudinale étant mesurées le long dudit axe longitudinal (X).

5. - Soupape antigel (1) selon l'une quelconque des revendications 2 à 4, dans laquelle ladite protubérance (13) est obtenue sur un élément d'étanchéité annulaire logé dans un siège respectif (17) ; et dans laquelle ledit renfoncement (11) est obtenu sur un corps de piston (18) relié à un élément thermosensible (9a) de manière à suivre le mouvement de celui-ci le long dudit axe longitudinal (X) en cas de variation de température de fluide perçue par ledit élément thermosensible (9a).

6. - Soupape antigel (1) selon l'une quelconque des revendications 2 à 5, dans laquelle ledit renfoncement (11) s'étend de manière angulaire par rapport audit axe longitudinal (X) selon un angle qui est inférieur à l'angle plein.

7. - Soupape antigel (1) selon l'une quelconque des revendications précédentes, dans laquelle ladite unité d'obturation (9) comprend un élément thermosensible (9a) qui fait saillie depuis ladite seconde cavité (8) vers ladite première cavité (3) pour entrer en contact direct avec un écoulement de fluide qui s'écoule entre ledit premier raccord (4) et ledit second raccord (5) et détecter ainsi la température du fluide dans ladite première cavité (3).

8. - Soupape antigel (1) selon la revendication 7, comprenant un seul élément élastique (19) positionné de manière fonctionnelle entre ledit corps de piston (18) et une surface interne (20) de ladite partie d'évacuation de fluide (6) afin d'exercer une force contraire longitudinale sur une force de dilatation thermique longitudinale associée audit élément thermosensible (9a), ladite force contraire étant orientée de manière à atteindre ladite au moins une position de fermeture (C, D).

9. - Soupape antigel (1) selon l'une quelconque des revendications précédentes, comprenant une rainure de dépôt (24) à proximité d'une ouverture de passage (27) entre ladite première cavité (3) et ladite seconde cavité (8) afin d'empêcher l'entrée de débris présents à l'intérieur dudit intervalle de passage de fluide (9b) et/ou à l'intérieur d'autres intervalles présents dans ladite unité d'obturation (9), ladite rainure de dépôt (24) comportant une surface de base (25) positionnée à une hauteur inférieure à celle de ladite ouverture de passage (27) de manière à favoriser le dépôt desdits débris à l'intérieur de ladite rainure de dépôt (24).

10. - Soupape antigel (1) selon l'une quelconque des revendications précédentes, dans laquelle ledit orifice d'évacuation (7 ; 7' ; 7") comprend un corps creux présentant un profil incliné (7a ; 7a' ; 7a"), ledit profil étant pris sur un plan médian dudit orifice d'évacuation (7 ; 7' ; 7"), ledit profil étant incliné par rapport audit axe longitudinal (X) de manière à permettre aux gouttes de fluide évacué adhérant audit orifice d'évacuation (7 ; 7' ; 7") d'être collectées et auxdites gouttes d'être retirées par gravité dudit orifice d'évacuation (7 ; 7' ; 7").

11. - Soupape antigel (1) selon la revendication 10, dans laquelle ledit profil incliné (7a ; 7a' ; 7a") comprend un profil courbe (7a), ledit profil courbe (7a) étant concave.

12. - Soupape antigel (1) selon la revendication 10, dans laquelle ledit profil incliné (7a ; 7a' ; 7a") comprend un profil sensiblement rectiligne (7a').

13. - Soupape antigel (1) selon l'une des revendications 10 à 12, dans laquelle ledit orifice d'évacuation (7") comprend une partie de forme radiale (7b"), ladite partie de forme radiale (7b") comportant à proximité dudit axe longitudinal (X) un élément en forme de broche (7c").
